# EUROPEAN PATENT APPLICATION

(11) **EP 4 564 071 A1**
(43) Date of publication of application: **04.06.2025**
(21) Application number: 23212995.7
(22) Date of filing: 29.11.2023
(51) Int. Cl.: G02B 6/44

(54) **OPTICAL FIBER SYSTEM WITH FIBER OPTIC TRAY AND MOUNT**

(71) Applicant: Corning Research & Development Corporation, Corning, New York 14831 (US)
(72) Inventor: GRALEWSKI-SEK, Grzegorz Konrad, 91-614 Lodz (PL); KRUPINSKA, Agnieszka Monika, 95-083 Lutomiersk (PL); NITKA, Grzegorz, 90-752 Lodz (PL)
(74) Representative: Reddie & Grose LLP

(57) **Abstract**

A fiber optic system is provided. The fiber optic system comprises a fiber optic tray and a fiber optic bracket for mounting the fiber optic tray in an equipment rack. The fiber optic tray comprises a cable entry port for receiving an optical fiber. The fiber optic bracket comprises one or more first retaining features for retaining the fiber optic tray and a mount for pivotably mounting the fiber optic bracket in the equipment rack about an axis of rotation. The one or more first retaining features of the fiber optic bracket are configured to retain the fiber optic tray with the cable entry port of the fiber optic tray proximal to the axis of rotation such that an optical fiber entering the fiber optic tray from the equipment rack enters the cable entry port substantially coaxial with the axis of rotation.

## Description

### TECHNICAL FIELD

The disclosure relates to the field of passive optical hardware and fiber optic apparatuses. In particular, the technology of the disclosure relates to fiber optic systems for managing and organising fiber optic cables, the systems including a fiber optic tray and a fiber optic bracket for pivotably mounting the fiber optic tray in an equipment rack.

### BACKGROUND

Fiber optic networks allow information to be transmitted via optical signals transmitted through special glass strands known as optical fibers. Compared with traditional copper wiring, optical fibers allow transmission over greater distances with substantially less signal loss, provide a greater bandwidth, and do not suffer from electrical interference. Fiber-optic networks are particularly useful when providing long-distance communication and high bandwidth, so called "super-fast", broadband internet.

Fiber optic networks often require high densities of fiber optic connections or other fiber optic components, such as splices, for example, in telecommunications central offices, data centres, or other similar locations. To store and organise high densities of optical fibers, equipment racks are typically used to hold network equipment. Such equipment racks may also be referred to as equipment frames or distribution frames, and are configured to organise incoming and outgoing optical fibers (and specifically, cables containing such optical fibers). Equipment racks used in fiber optic networks also typically support one or more optical fiber trays. In general, these optical fiber trays have fiber optic components disposed upon them, and may include splice trays, patch trays, splitter trays and so forth.

To enable access to densely stacked fiber optic trays, fiber optic trays are typically configured to be slid at least partially out of the equipment rack. Such fiber optic trays may themselves support one or more fiber optic cassettes or themselves define a fiber optic cassette. However, sliding a fiber optic tray into and out of an equipment rack can cause undesired movement of optical fibers passing into and out of the fiber optic tray from the equipment rack, risking kinking or otherwise damaging the optical fibers.

Aspects of the present invention may address one or more of the above problems, amongst others.

### SUMMARY OF INVENTION

The invention is defined in the independent claims, to which the reader is now directed. Preferred or advantageous features are set out in the dependent claims.

According to a first aspect of the invention there is provided a fiber optic system comprising a fiber optic tray and a fiber optic bracket for mounting the fiber optic tray in an equipment rack. The fiber optic tray comprises a cable entry port for receiving an optical fiber. The fiber optic bracket comprises one or more first retaining features for retaining the fiber optic tray and a mount for pivotably mounting the fiber optic bracket in the equipment rack about an axis of rotation. The one or more first retaining features of the fiber optic bracket are configured to retain the fiber optic tray with the cable entry port of the fiber optic tray proximal to the axis of rotation such that an optical fiber entering the fiber optic tray from the equipment rack enters the cable entry port substantially coaxial with the axis of rotation.

Having an optical fiber bracket to mount an optical fiber tray in an optical fiber rack in this manner, such that when passing from the optical fiber rack into the cable entry port of the optical fiber tray an optical fiber is coaxial with an axis of rotation of the fiber optic bracket, means that when the fiber optic bracket is rotated about its axis of rotation the optical fiber is put under minimal strain. This means that a fiber optic tray can be accessed in an equipment rack (e.g., by lifting up adjacent fiber optic trays, rotating them about the axis of rotation of each corresponding fiber optic bracket) whilst minimising the risk of damage to optical fibers in the equipment rack. In particular, the optical fibers are not pulled or bent, reducing the risk of kinks or breakages in the optical fibers.

Optionally, the fiber optic tray comprises a first side and a second side opposite the first side, the first side including a slack storage region for storing excess length optical fiber that is received by the fiber optic tray

The fiber optic bracket may comprise a base having an aperture, and the one or more first retaining features of the fiber optic bracket can, therefore, be configured to retain the fiber optic tray with the first side of the fiber optic tray adjacent to the base of the fiber optic bracket such that the slack storage region on the first side is accessible through the aperture.

The fiber optic bracket having an aperture means that both sides of a fiber optic tray can be accessed without having to remove the fiber optic tray from the fiber optic bracket. Furthermore, by having the fiber optic bracket pivotably mounted in the equipment rack, the fiber optic bracket can be rotated so as to present both sides of the fiber optic tray to a user, further increasing the ease of access to the fiber optic components on the fiber optic tray. This enables a high density of fiber optic components to be stored in the equipment rack whilst maintaining ease of access for maintenance, repair, adding new components and fibers, etc.

Optionally, the fiber optic tray comprises one or more second retaining features for engaging with the one or more first retaining features of the fiber optic bracket to retain the fiber optic tray on the fiber optic bracket.

Having first retaining features on the fiber optic bracket and second retaining features of the fiber optic tray helps to ensure that the fiber optic tray is securely held in the fiber optic bracket. This is particularly important as the fiber optic bracket, and hence the fiber optic tray, is rotatable relative to an equipment rack when installed meaning that the fiber optic tray must be securely held even when the fiber optic bracket is in a number of different orientations.

Optionally, the one or more first retaining features comprise one or more pins and the one or more second retaining features comprise one or more holes for engaging with the one or more pins. Additionally or alternatively, the one or more second retaining features comprise one or more pins and the one or more first retaining features comprise one or more holes for engaging with the one or more pins.

Optionally, the one or more first retaining features comprise one or more guides and the one or more second retaining features comprise one or more rails for engaging with the one or more guides such that the fiber optic tray can be slid into a retained position on the fiber optic bracket. Additionally or alternatively, the one or more first retaining features comprise one or more rails for engaging with the one or more guides such that the fiber optic tray can be slid into a retained position on the fiber optic bracket.

Combinations of pins, holes, guides and rails may be used for either or both of the first and second retaining features. Advantageously, a combination of each are used across the first and second retaining features so as to retain the fiber optic tray in the fiber optic bracket with respect to different directions of movement. Furthermore, the use of guides and rails in the first and/or second retaining features can also assist with the installation of the fiber optic tray in the fiber optic bracket by guiding the fiber optic tray into the correct retained position on the fiber optic bracket.

Optionally, the fiber optic bracket further comprises one or more cable routing regions arranged at one or both of a pair of opposing edges of the fiber optic bracket extending between a rear edge of the fiber optic bracket and a front edge of the fiber optic bracket. The rear edge of the fiber optic bracket is typically the edge closest to the axis of rotation of the fiber optic bracket.

Providing cable routing regions on the fiber optic bracket can help organise optic fibers and cables within an optical fiber rack. This is particularly beneficial when a front edge of the fiber optic tray (an edge proximal to the front edge of the fiber optic bracket) has a number of adapters or connects for optical fibers, which then need to be routed to the equipment rack.

Optionally, the one or more cable routing regions each comprise one or more cable fixing features for retaining fiber optic cables passing through the cable routing regions.

Having cable fixing features in the cable routing regions is particularly beneficial considering that the fiber optic bracket is configured to be pivotably mounted to an equipment rack, and so the orientation of the fiber optic bracket and optical fibers will vary in use.

Optionally, the fiber optic tray further comprises one or more fiber optic adapters on an opposing edge to the cable entry port. In this case, the fiber optic bracket is configured to retain the fiber optic tray such that the cable entry port is proximal to the rear edge of the fiber optic bracket and such that one or more fiber optic adapters are proximal to the front edge of the fiber optic bracket.

Such an arrangement of the cable entry port and fiber optic adapters (which are configured to receive fiber optic connectors) enables the fiber optic system to be used for a number of purposes, and provide an adaptable system for densely providing fiber optic components.

Optionally, the one or more cable routing regions are configured to route optical fibers from the fiber optic bracket to the one or more fiber optic adapters.

In this way, the fiber optic bracket can ensure that, despite the pivotable movement of the fiber optic bracket when installed in an equipment rack, optical fibers connected to the fiber optic adapters (i.e., through a fiber optic connector) can be safely routed to the equipment rack.

Optionally, the fiber optic system further comprises the equipment rack. The equipment rack comprises a mount for engaging with the mount of the fiber optic bracket to pivotably mount the fiber optic bracket in the equipment rack about the axis of rotation.

In some cases, the rack is configured to receive (and the system may comprise) a plurality of fiber optic brackets. In this way, a dense yet accessible system is provided for managing fiber optic networks.

Optionally, the mount comprises a pair of coaxially aligned holes and/or slots for engagement with corresponding pins on the equipment rack. In particular, the mount of the fiber optic bracket may comprise a first of coaxially aligned pin and a second coaxially aligned pin and the mount of the equipment rack comprises a hole and a slot. In this case, the mounts of the fiber optic bracket and the equipment rack can be arranged such that the fiber optic bracket can be mounted to the equipment rack by inserting the first coaxially aligned pin of the fiber optic bracket into the hole and sliding the second coaxially aligned pin of the fiber optic bracket into the slot. Preferably, the slot is slanted so as to retain the fiber optic bracket in a mounted position in the equipment rack once mounted through the action of gravity.

Utilising a hole and a slot provides a simple mechanism by which the fiber optic bracket can be mounted in the equipment rack in a way that enables the fiber optic bracket to be pivoted about the axis of rotation. It also enables the fiber optic bracket to easily be removed from the equipment rack if needed, such as for maintenance or repair.

Optionally, the fiber optic tray is a fiber optic splice tray or a fiber optic patch tray.

According to a second aspect of the invention, a fiber optic bracket for mounting a fiber optic tray in an equipment rack is provided. The fiber optic bracket has a front edge and a rear edge opposite the front edge. The fiber optic bracket comprises a mount positioned proximal to the rear edge of the fiber optic bracket for pivotably mounting the fiber optic bracket in an equipment rack about an axis of rotation; one or more first retaining features for retaining a fiber optic tray; and a fiber optic entry region at the rear edge for receiving an optical fiber routed from the equipment rack to a fiber optic tray installed in the fiber optic bracket such that the optical fiber substantially aligns with the axis of rotation when passing through the fiber optic entry region.

The fiber optic bracket having a mount for pivotably connecting the fiber optic bracket to an equipment rack and a fiber optic entry region at the rear edge proximal to the axis of rotation of the fiber optic bracket means that as an optical fiber is routed from an equipment rack to the fiber optic bracket, when the fiber optic bracket is in use, the optical fiber will substantially align with the axis of rotation. This means that as the fiber optic bracket is pivoted relative to the equipment rack in which it is installed the optical fiber will not bend or be pulled. This reduces the risk of kinking or otherwise damaging the optical fiber.

Optionally, the fiber optic bracket is for use with a fiber optic tray having a rear edge comprising a cable entry port for routing an optical fiber from the equipment rack into the fiber optic tray. In this case, the one or more retaining features of the fiber optic bracket are configured to retain the fiber optic tray such that the rear edge of the fiber optic tray substantially aligns with the axis of rotation to position the cable entry port within the fiber optic entry region of the fiber optic bracket.

In this manner, the fiber optic bracket ensures that an optical fiber passes into the fiber optic tray from the equipment rack in such a way that the optical fiber is substantially coaxial to the axis of rotation when it enters the fiber optic tray. This helps reduce the risk of damage to the optical fiber whilst still ensuring the accessibility of the fiber optic tray when installed in an equipment rack using the fiber optic bracket.

Optionally, the fiber optic bracket further comprises a base. The one or more bracket retaining features are configured to retain the fiber optic tray such that a side of the fiber optic tray is adjacent to the base. Furthermore, the base comprises a cut-out region (i.e., an aperture) to allow access to the side of the fiber optic tray adjacent to the base through the fiber optic bracket.

The fiber optic bracket having a cut-out region means that both sides of a fiber optic tray can be accessed without having to remove the fiber optic tray from the fiber optic bracket. Furthermore, by having the fiber optic bracket pivotably mounted in the equipment rack, the fiber optic bracket can be rotated so as to present both sides of the fiber optic tray to a user, further increasing the ease of access to the fiber optic components on the fiber optic tray. This enables a high density of fiber optic components to be stored in the equipment rack whilst maintaining ease of access for maintenance, repair, adding new components and fibers, etc.

Optionally, the mount comprises a pair of coaxially aligned pins for engagement with a corresponding holes and slot in the an equipment rack.

Utilising a hole and a slot provides a simple mechanism by which the fiber optic bracket can be mounted in the equipment rack in a way that enables the fiber optic bracket to be pivoted about the axis of rotation. It also enables the fiber optic bracket to easily be removed from the equipment rack if needed, such as for maintenance or repair.

Optionally, the first retaining features comprise one or more protrusions for engaging with corresponding openings in the fiber optic tray. Additionally, or alternatively, the first retaining features comprise one or more openings for engaging with corresponding protrusions on the fiber optic tray.

Optionally, the bracket first retaining features comprise two or more rails to enable the fiber optic tray to be slid into a retained position on the fiber optic bracket.

Combinations of pins, holes, and rails may be used for either or both of the first and second retaining features. Advantageously, a combination of each are used in the first retaining features so as to enable the fiber optic bracket to retain the fiber optic tray with respect to different directions of movement. Furthermore, the use of rails in the first retaining features can also assist with the installation of a fiber optic tray in the fiber optic bracket by helping to guide the fiber optic tray into the correct retained position on the fiber optic bracket.

Optionally, the fiber optic bracket further comprises one or more cable routing regions arranged at one or both of a pair of opposing edges of the fiber optic bracket extending between the rear bracket edge and the front bracket edge.

Providing cable routing regions on the fiber optic bracket can help organise optic fibers and cables within an optical fiber rack.

Optionally, the one or more cable routing regions each comprise one or more cable fixing features for retaining fiber optic cables passing through the cable routing regions. Optionally, the one or more cable routing regions are configured to route fiber optic cables from the equipment rack to a front portion of a fiber optic tray retained by the fiber optic bracket.

Having cable fixing features in the cable routing regions is particularly beneficial considering that the fiber optic bracket is configured to be pivotably mounted to an equipment rack, and so the orientation of the fiber optic bracket and optical fibers will vary in use.

According to a third aspect of the invention, a fiber optic system comprising the fiber optic bracket of the second aspect of the invention and a fiber optic tray is provided. The fiber optic tray comprises a cable entry port along a rear tray edge of the fiber optic tray and one or more second retaining features for engaging with the one or more first retaining features of the fiber optic bracket to retain the fiber optic tray in the fiber optic bracket when installed.

Providing a fiber optic tray with a cable entry port in this manner ensures that an optical fiber passes into the fiber optic tray from the equipment rack in such a way that the optical fiber is substantially coaxial to the axis of rotation when it enters the fiber optic tray. This helps reduce the risk of damage to the optical fiber whilst still ensuring the accessibility of the fiber optic tray when installed in an equipment rack using the fiber optic bracket.

Optionally, the one or more second retaining features comprise one or more openings for engaging with corresponding protrusions on the fiber optic bracket. Additionally, or alternatively, the second retaining features comprise one or more protrusions for engaging with corresponding openings on the fiber optic bracket.

Optionally, the fiber optic tray comprises a plurality a fiber optic adapters along a front tray edge of the fiber optic tray, the front tray edge opposite the rear tray edge.

Such an arrangement of the cable entry port and fiber optic adapters (which are configured to receive fiber optic connectors) enables the fiber optic system to be used for a number of purposes, and provide an adaptable system for densely providing fiber optic components.

Optionally, the fiber optic tray comprises a first side and a second side opposite the first side, the first and second side each having one or more fiber optic components disposed thereon. The fiber optic bracket is configured to retain the fiber optic tray such that the first side is adjacent to the base of the fiber optic bracket such that the fiber optic components disposed on the first side of the fiber optic tray are accessible through the cut-out region in the base of the fiber optic bracket.

In this manner, the system provides a fiber optic tray can be accessed without having to remove the fiber optic tray from the fiber optic bracket. Furthermore, the fiber optic bracket can be rotated so as to present both sides of the fiber optic tray to a user, further increasing the ease of access to the fiber optic components on the fiber optic tray. This enables a high density of fiber optic components to be stored in the equipment rack whilst maintaining ease of access for maintenance, repair, adding new components and fibers, etc.

Optionally, the fiber optic tray is a splice tray or a patch tray.

Optionally, the system further comprises an equipment rack comprising an equipment rack mount for engaging with the mount of the fiber optic bracket to pivotably mount the fiber optic bracket in the equipment rack about the axis of rotation.

Optionally, the mount of the fiber optic bracket comprises first and second coaxially aligned pins or protrusions. In this case, the equipment rack mount comprises a hole and a slot such that the fiber optic bracket can be mounted by inserting the first coaxially aligned pin of the fiber optic bracket into the hole and sliding the second coaxially aligned pin into the slot.

Utilising a hole and a slot provides a simple mechanism by which the fiber optic bracket can be mounted in the equipment rack in a way that enables the fiber optic bracket to be pivoted about the axis of rotation. It also enables the fiber optic bracket to easily be removed from the equipment rack if needed, such as for maintenance or repair.

Optionally, an end of the slot of the equipment rack mount is coaxially aligned with the hole of the equipment rack mount and the slot is angled such that, in use, gravity retains the fiber optic bracket in the slot such that the axis of rotation of the fiber optic bracket is coxial with the axis of the hole of the equipment rack mount.

Accordingly, the fiber optic bracket can easily be mounted and removed from the equipment rack as desired and pivoted when in use to provide ease of access to the fiber optic tray.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the
Figures, in which:
   Figure 1 is a perspective view of an example fiber optic bracket according to aspects of this disclosure;
   Figure 2A is a perspective view of an example fiber optic tray according to aspects of this disclosure;
   Figure 2B is a perspective view of the example fiber optic tray of Figure 2A in an open position;
   Figure 2C is a perspective view of an underside of the example fiber optic tray of
   Figure 2A;

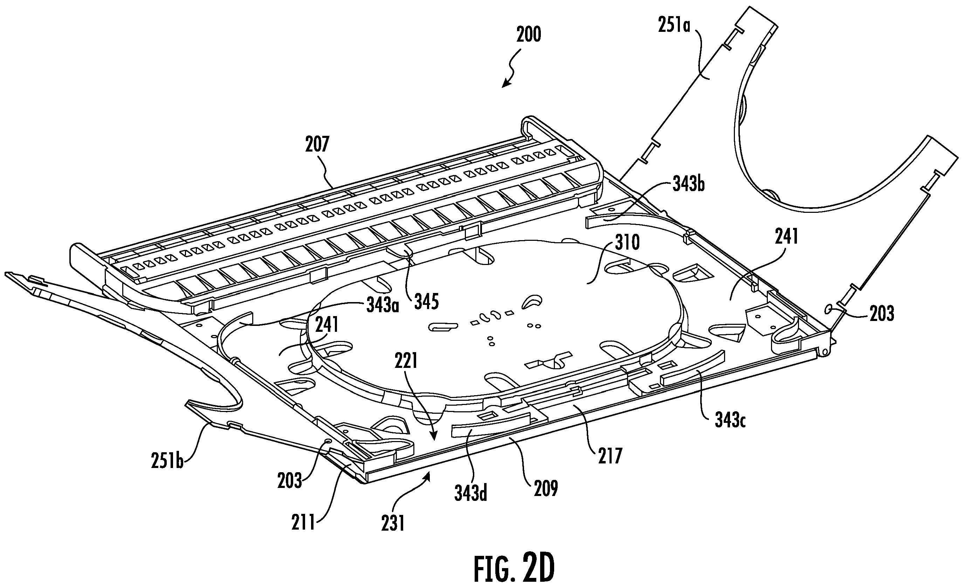

   Figure 2D is a perspective view of an underside of the example fiber optic tray of

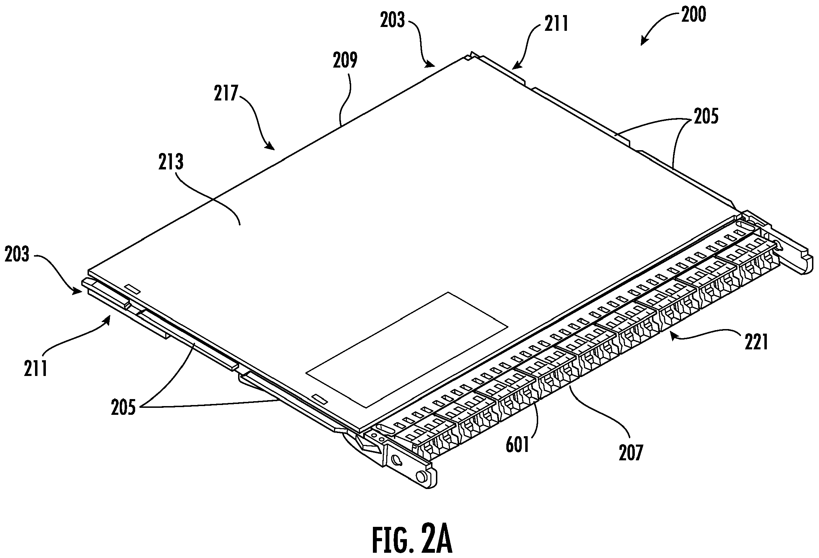

   Figure 2A in an open position;

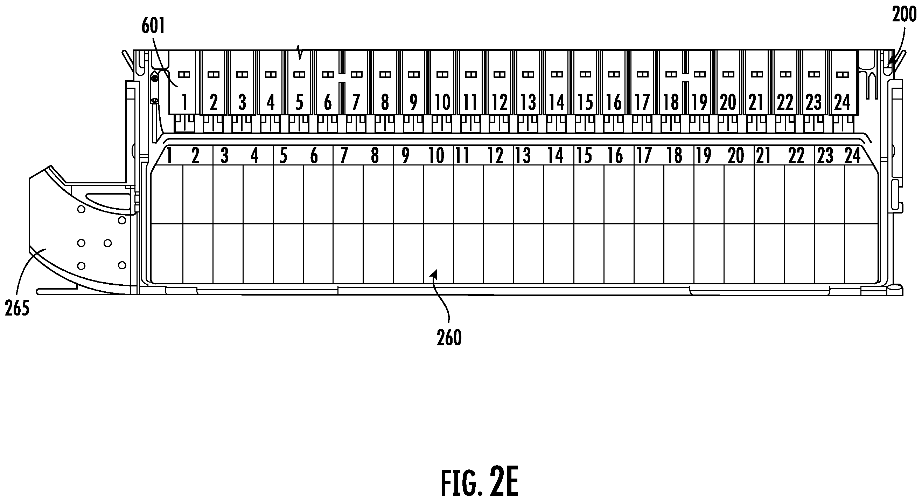

   Figure 2E is a top view of a handle attached to a front portion of the example fiber optic tray of Figure 2A.

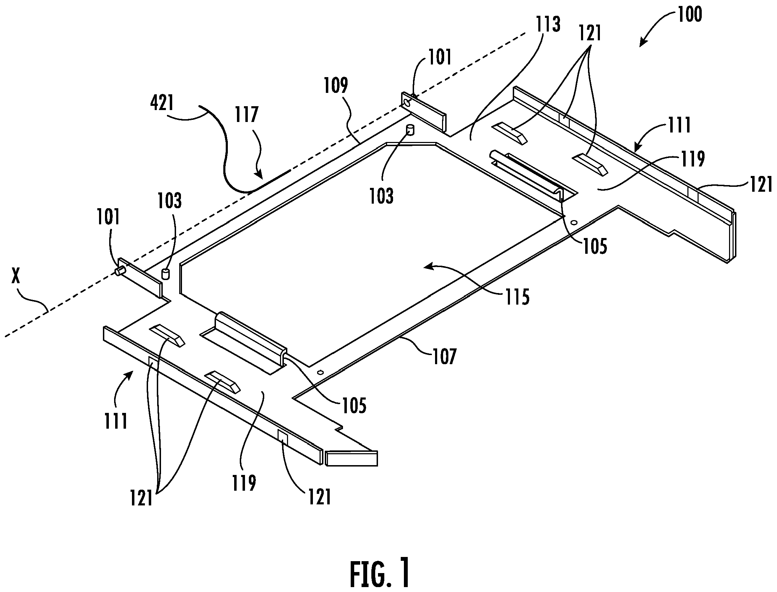

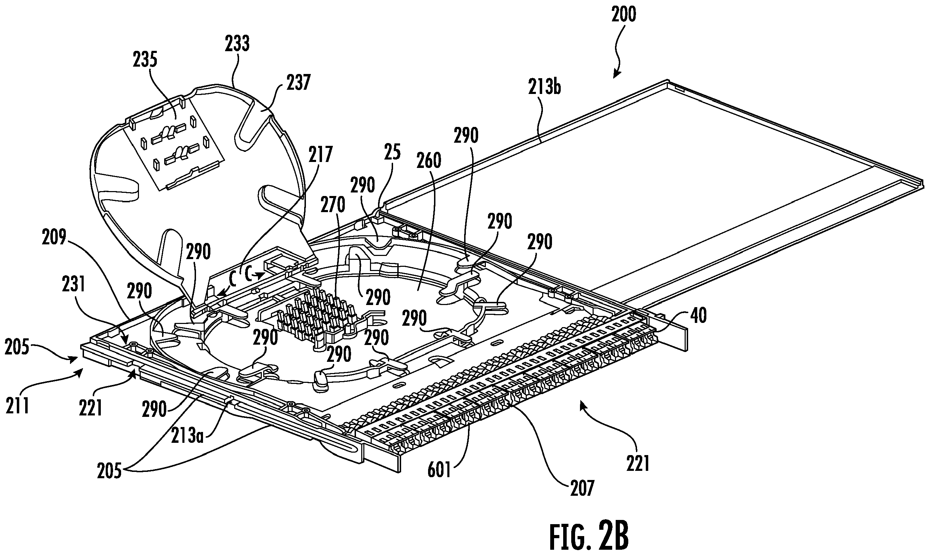

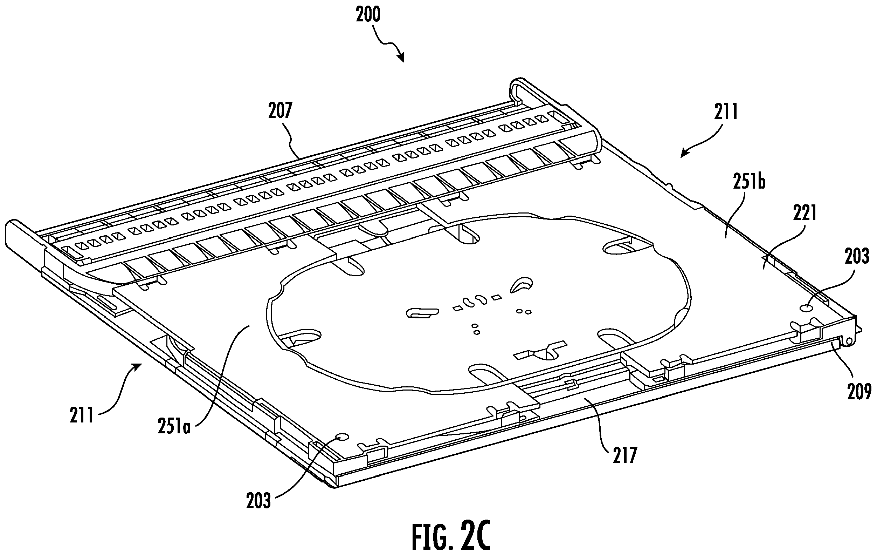

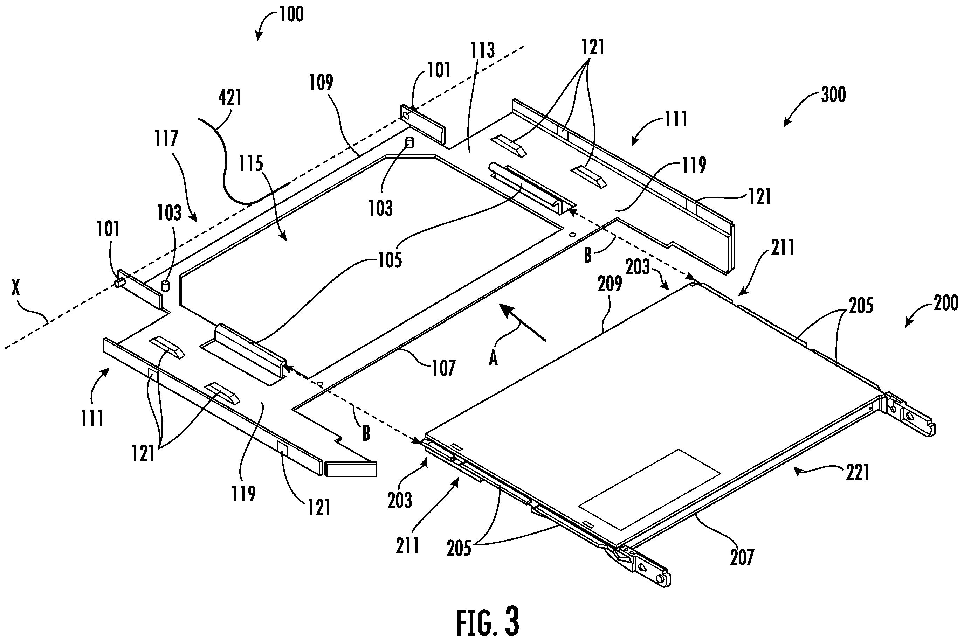

   Figure 3 is a perspective view illustrating how the fiber optic bracket of Figure 1 is configured to receive the fiber optic tray of Figure 2;

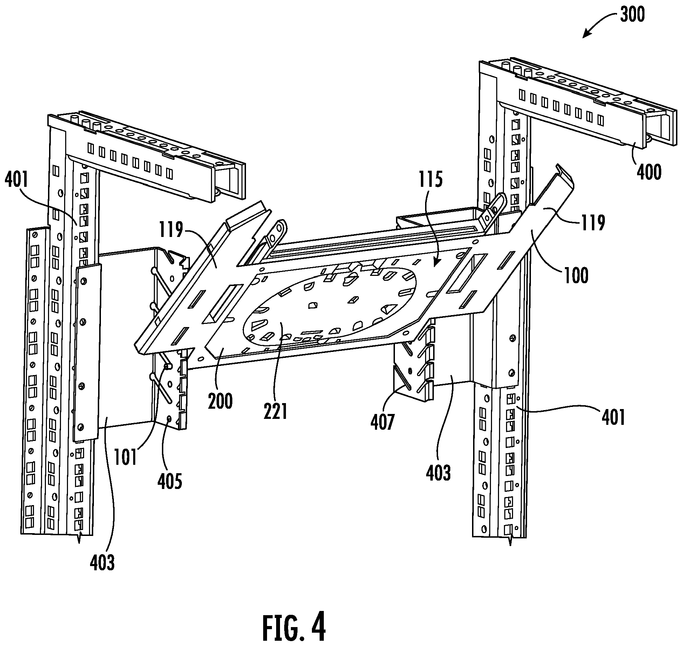

   Figure 4 is a perspective view illustrating the fiber optic bracket of Figure 1 and the fiber optic tray of Figure 2 being part of a fiber optic system ;

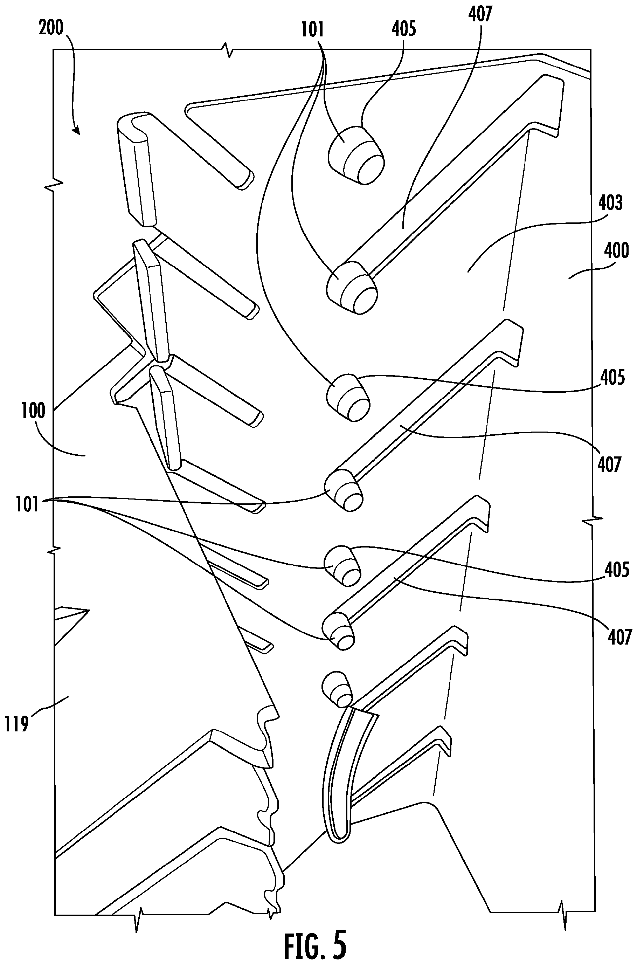

   Figure 5 is a close-up view of a rack mounting portion of the fiber optic system of
   Figure 4; and

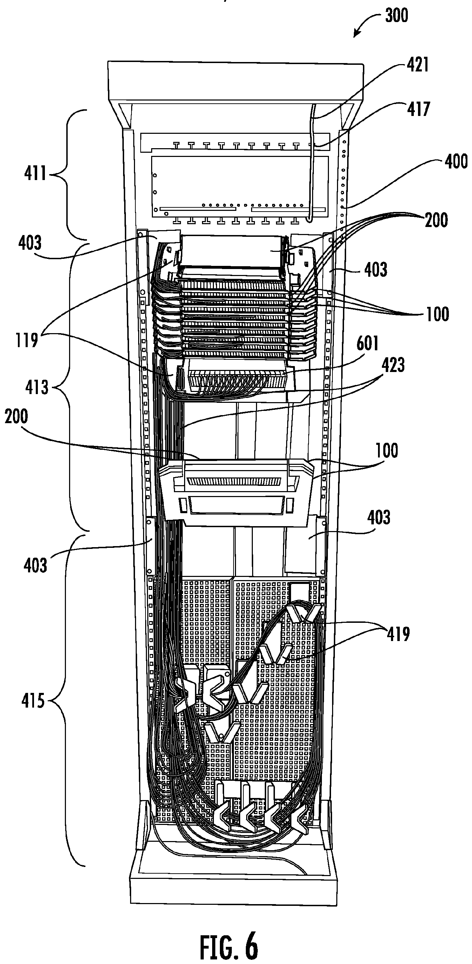

   Figure 6 is a front view of yet another fiber optic system according to aspects of this disclosure.

Like components across different figures are represented by like reference numerals.

### DETAILED DESCRIPTION OF THE INVENTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

As used in this disclosure, the term "optical fiber" or "optical fibers" include all types of single mode and multi-mode optical fibers in any form. For example, various routing of optical fibers is described below. Skilled persons will appreciate that the optical fibers may be in a cabled form (i.e., carried within a cable jacket) or non-cabled form (e.g., as a "loose" optical fiber, potentially with one or more protective coatings over a bare glass portion). When in a cabled form, there may be a single optical fiber or multiple optical fibers carried within a cable jacket.

It will also be appreciated that the terms "incoming" and "outgoing" with respect to optical fibers and/or cables are used to exemplify how the fiber optic system and features disclosed herein may be arranged and are primarily used merely to differentiate two different optical fibers and/or cables, but should not be taken as limiting in the direction in which signals can travel through optical fibers used with the present disclosure or the position of these optical fibers or the fiber optic system of the present disclosure within a larger fiber optic network.

Figure 1 illustrates a fiber optic bracket 100. Fiber optic bracket 100 can be used to mount a fiber optic tray, such as fiber optic tray 200 described below with respect to Figure 2, in an equipment rack 400, for example as illustrated in Figure 4.

The fiber optic bracket 100 of Figure 1 is generally planar and rectangular in shape. The fiber optic bracket 100 comprises a front edge 107 and a rear edge 109, and two side edges 111 extending between the front edge 107 and the rear edge 109, and substantially perpendicular to both the front edge 107 and the rear edge 109. Between the front, rear, and side edges 107, 109, 111 of the fiber optic bracket 100, the fiber optic bracket 100 comprises a base 113 forming the body of the fiber optic bracket 100. As will be discussed in more detail below, the base 113 of the fiber optic bracket 100 preferably comprises an aperture 115, also called a cut-out region 115.

To enable the fiber optic bracket 100 to mount a fiber optic tray 200 in an equipment rack 400, fiber optic bracket 100 is provided with a mount 101 and first retaining features 103, 105.

The mount 101 is used to mount the fiber optic bracket 100 to an equipment rack 400 such that fiber optic bracket 100 can pivot about an axis of rotation X. The mount 101 is located at or proximal to the rear edge 109 of the fiber optic bracket 100 and is preferably parallel to the rear edge 109 of the fiber optic bracket 100. As illustrated in Figure 1, the mount 101 may comprise a pair of coaxial pins 101a, 101b that engage with corresponding holes 405 or slots 407 in the equipment rack 400 as discussed in more detail with respect to Figures 4 and 5.

The first retaining features 103, 105 of the fiber optic bracket 100 may be configured to retain a fiber optic tray 200 in an installed position on the fiber optic bracket 100 as well as to facilitate the installation and/or the removal of the fiber optic tray 200 from the fiber optic bracket 100. To retain a fiber optic tray 200 in an installed position on the fiber optic bracket 100, the first retaining features 103, 105 may comprise one or more pins 103. As illustrated in Figure 1, fiber optic bracket 100 comprises two pins 103, but more or fewer pins 103 may be used in other examples. The pins 103 are located towards the rear edge 109 of the fiber optic bracket 100. The pins 103 are configured to interact with corresponding second retaining features 203, in the form of holes for the illustrated embodiment, in a fiber optic tray 200.

To facilitate the installation and removal of a fiber optic tray 200 from the fiber optic bracket 100, the fiber optic bracket 100 also comprises retaining features in the form of guides 105, which may also be referred to as rails 105. Guides 105 are configured to receive corresponding rails 205 of a fiber optic tray 200 (illustrated in Figure 2) so as to guide the fiber optic tray 200 into position on the fiber optic bracket 100. The guides 105 are preferably parallel to the side edges 111 of the fiber optic bracket 100, or, equivalently, perpendicular to the rear 109 of the fiber optic bracket 100. In particular, the guides 105 may be perpendicular to the axis of rotation X of the fiber optic bracket 100.

In the illustrated example of fiber optic bracket 100 in Figure 1, the guides 105 are formed by forming two generally U-shaped cuts in the base 113 of the fiber optic bracket 100 such that the portions of the base 113 within the U-shaped cuts can be bent as illustrated in Figure 1 to form guides 105. Creating the guides 105 in this manner efficiently utilises material, requiring no additional material to be used to form the guides 105. However, guides 105 may be formed by other means, such as by attaching additional material to the base 113.

At the rear edge 109 of the fiber optic bracket 100 is a fiber optic entry region 117. This is a region of the fiber optic bracket 100 configured for receiving an incoming optical fiber 421 routed from an equipment rack 400 to a fiber optic tray 200 installed on the fiber optic bracket 100. The fiber optic entry region 117 is configured such that the incoming optical fiber 421 received through the fiber optic entry region 117 substantially aligns (i.e., is coaxial) with the axis of rotation X of the fiber optic bracket 100 when passing through the fiber optic entry region 117. Hence, the fiber optic entry region 117 may be generally aligned with the axis of rotation X of the fiber optic bracket 100. In the illustrated example of Figure 1, the fiber optic entry region 117 is defined between the coaxial pins 101a, 101b of mount 101.

At the side edges 111 of the fiber optic bracket 100 are cable routing regions 119. As illustrated, a cable routing region 119 is provided at both side edges 111 of the fiber optic bracket 100, though in other examples a cable routing region 119 may be provided at only one of the side edges 111 of the fiber optic bracket 100, or the cable routing regions 119 may be omitted entirely from fiber optic bracket 100.

The cable routing regions 119 extend between the front edge 107 and the rear edge 109 of the fiber optic bracket 100 and are configured to help route outgoing optical fibers 423 from the front 207 of a fiber optic tray 200 to the equipment rack 400 around the outside of the fiber optic tray 200. The cable routing regions 119 can also extend, as illustrated, beyond the front edge 107 of the fiber optic bracket 100 to provide protection for fiber optic connections made along the front 207 of a fiber optic tray 200 installed on the fiber optic bracket 100. To help manage outgoing optical fibers 423 routed through cable routing regions 119, cable routing regions may comprise one or more cable fixing features 121. The cable fixing features 121 may take any suitable form, such as cut-outs or protrusions, and for example may enable cable-ties to be used to organise and secure outgoing optical fibers 423 in the cable routing regions 119.

As previously discussed, the fiber optic bracket 100 described with respect to Figure 1 is configured to be used with a fiber optic tray 200. Such a fiber optic tray 200 will now be described with respect to Figures 2A to 2E.

Figure 2A illustrates a fiber optic tray 200 being substantially rectangular in shape with four main edges: a front edge 207, a rear edge 209 opposite the front edge 207, and parallel side edges 211 extending between the front edge 207 and the rear edge 209 and perpendicular to the front edge 207 and the rear edge 209.

The fiber optic tray 200 may be open or may be enclosed, forming a volume within a housing 213. The fiber optic tray 200 illustrated in Figure 2A is takes the form of an enclosed fiber optic tray 200, sometimes referred to as a cassette. The housing 213 of an enclosed fiber optic tray 200, such as that illustrated in Figure 2A, may be comprised of at least two pieces (e.g., a body 213a and a lid 213b) that can come apart or open (e.g., about a hinge) to provide access to the volume within the housing 213. The fiber optic tray 200 of Figure 2A is illustrated in an open state in Figure 2B.

Within fiber optic tray 200 (or on the fiber optic tray 200 if an open fiber optic tray is provided) are one or more fiber optic components. As can be seen in Figure 2B, the fiber optic tray 200 may comprise a second side 231 (i.e., a top side). A plurality of tray cable retaining members 290 may be arranged on the second side 231 of the fiber optic tray 200 for either or both guiding and retaining optical fibers (e.g., as part of optical cables) on the fiber optic tray 200. The periphery members 290 may be any suitable structure that guides, catches, or secures optical fibers, or that facilitates winding or wrapping of the optical fibers along a predetermined pathway on the fiber optic tray 200.

Optical fibers may also be coupled to fiber optic adapters 601 at the front 207 of the fiber optic tray 200 that are configured to receive a plurality of fiber optic connectors (not shown). Optionally, a handle or routing support 260 (Figure 2E) may be coupled to the front 207 of the fiber optic tray 200 or formed as part of the fiber optic tray 200. The handle 260 may protect the fiber optic connectors (not shown) that are plugged into the fiber optic adapters 601 during use. The handle 260 may be coupled to the fiber optic tray 207 through a lockable pivot or hinge connection to allow a user to selectively swing down the handle 260 to provide better access to the fiber optic adapters 601 (or to fiber optic connectors received by the fiber optic adapters 601). Additionally, the handle 260 may include labels or other indicia on a surface thereof in front of the fiber optic adapters 601 to further assist with managing and establishing the appropriate connections. A cable guidance feature 265 may be formed on or coupled to a side of the handle 260. The handle 260 is not shown in Figures 2A-2D and various other figures discussed below to simplify the drawings. Similarly, the fiber optic adapters 601 are not shown in various figures (including Figures 2C and 2D) to simplify the drawings.

As shown in Figure 2B, a fiber optic component holder 233 may also be attached to the second side 231 of the fiber optic tray 200. The fiber optic component holder 233 may close on an axis of the fiber optic tray body 213a perpendicular to the closure axis of the fiber optic tray lid 213b, such that the fiber optic tray appears as shown in Figure 2A when both the fiber optic component holder 233 and the fiber optic tray lid 213b are closed. Thus, in some embodiments, when the fiber optic component holder 233 is closed and the fiber optic tray lid 213b is also closed, the fiber optic component holder 233 is interposed between the second surface 231 of the fiber optic tray 200 and the fiber optic tray lid 213b. In some embodiments, the fiber optic tray lid 213b may be made of a transparent or translucent material that enables a technician to view connections and devices on the fiber optic tray body 213a through the fiber optic tray lid 213b. Additionally, the fiber optic component holder 223 may also be made of a transparent or translucent material that enables a technician to view connections and devices on the fiber optic tray body 213a through the fiber optic component holder 233.

The fiber optic component holder 233 may include at least one fiber optic component securing member 235 configured to secure one or more fiber optic components (not shown) such as, but not limited to, a fan-out or furcation body, a wavelength division multiplexer device, or an optical splitter. Thus, when the fiber optic component holder 233 is closed, the fiber optic component or fiber optic components (not shown) secured in the fiber optic component holder 233 may fit into the a designated portion or region on the fiber optic tray body 213a. Additionally, the fiber optic component holder 233 may include holder fiber guidance members 237 configured to guide optical fibers from the fiber optic tray body 213a to a fiber optic component (not shown) secured in the at least one fiber optic component securing member 235.

Alternatively, or additionally, one or more other fiber optic components or attachments or mounts for receiving fiber optic components may be provided elsewhere on the fiber optic tray 200, such as fiber optic splice holder 270 provided on the second side 231 of the fiber optic tray body 213a. Generally, fiber optic components can include splitters, splices, connectors, adapters, fiber storage components, or features for retaining splitters, splices, connectors, adapters, and the like. It will be understood that this is an exemplary, non-exhaustive list and that other fiber optic components suitable to be provided upon or within a fiber optic tray 200 will be known to the skilled person.

To allow an incoming optical fiber 421 to enter the fiber optic tray 200, especially in the case of an enclosed fiber optic tray 200, a cable entry port 217 is provided at the rear edge 209 of the fiber optic tray 200. The cable entry port 217 comprises an aperture or opening through which an incoming optical fiber 421 can enter into the fiber optic tray 200 such that the incoming optical fiber 421 entering the fiber optic tray 200 from an equipment rack 400 enters the cable entry port 217 substantially coaxial with the axis of rotation X of the fiber optic bracket 100 upon which the fiber optic tray 200 is installed. That is, the incoming optical fiber 421 enters along one of the directions as indicated by arrows C.

To enable installation of the fiber optic tray 200 in a fiber optic bracket 100, fiber optic tray 200 comprises rails 205 along the side edges 211 of the fiber optic tray 200. Fiber optic tray 200 may also comprise one or more second retaining features 203 on a first side 221 (i.e., an underside) of the fiber optic tray 200, as illustrated in Figure 2C. That is, fiber optic tray 200 may comprise one or more second retaining features 203 on a side 221 configured to be in contact with or adjacent to the base 113 of a fiber optic bracket 100. These second retaining features 203 are configured to engage with the first retaining features 103 of the fiber optic bracket 100. In the illustrated example, the second retaining features 203 comprise holes (not shown) to engage with the pins that serve as the first retaining features 103 of the fiber optic bracket 100. How the fiber optic tray 200 is installed on a fiber optic bracket 100 will now be discussed further down in the disclosure with reference to Figure 3.

The first side 221 of the fiber optic tray 200 may also comprise a slack storage region 241 (illustrated in Figure 2D), which may be covered by a first slack cover 251a and a second slack cover 251b, both attached to the first side 221 of the fiber optic tray 200 via respective hinges to provide access to the slack storage region 241 when in an open position, illustrated in Figure 2D. As will be discussed below, however, the first and second slack covers 251a, 251b may be removable or not provided at all in some embodiments. Guidance of optical fibres within the slack storage region 241 may be facilitated by guidance members 343a, 343b, 343c, 343d positioned at bends of the continuous slack passage. Additional guidance and retaining of optical cables may be provided by retaining members such as slack-passage overhead retaining member 345. One or more transition passages may be provided through which optical fibers can be routed from the first side 221 to the second side 231 and vice versa.

Alternatively, or additionally, one or more other fiber optic components or attachments or mounts for receiving fiber optic components may be provided elsewhere on the first side 221 of fiber optic tray 200. Generally, fiber optic components can include splitters, splices, connectors, adapters, fiber storage components, or features for retaining splitters, splices, connectors, adapters, and the like. It will be understood that this is an exemplary, non-exhaustive list and that other fiber optic components suitable to be provided upon or within a fiber optic tray 200 will be known to the skilled person.

Figure 3 illustrates a fiber optic system 300 comprising the fiber optic bracket 100 of Figure 1 and the fiber optic tray 200 of Figures 2A-D (without the fiber optic adapters 601). Generally, fiber optic tray 200 is installed in fiber optic bracket 100 by positioning fiber optic tray 200 in front of fiber optic bracket 100 such that the rear edge 209 of fiber optic tray 200 is parallel to the front edge 107 of fiber optic bracket 100 and such that rails 205 of fiber optic tray 200 align with guides 105 of fiber optic bracket 100, illustrated by dashed lines B. Fiber optic tray 200 is then moved backwards (i.e., in the direction of arrow A) so that rails 205 of the fiber optic tray 200 engage with the guides 105 of the fiber optic bracket 100 until the first retaining features 103 (e.g., pins) of the fiber optic bracket 100 engage with the second retaining features 203 (e.g., holes) of the fiber optic tray 200.

With the fiber optic tray 200 installed in the fiber optic bracket 100, optical fibers 421, 423 can be routed through the fiber optic system 300. For example, an incoming optical fiber 421 can be passed into the fiber optic tray 200 through the cable entry port 217 (Figures 2B-D) of the fiber optic tray 200 at the rear 209 of the fiber optic tray 200 such that it is coaxial with the axis of rotation X of the fiber optic bracket 100 when it enters the cable entry port 217. Similarly, outgoing optical fibers 423 (Figure 6) can be routed through the cable routing regions 119 of the fiber optic bracket 100 and secured using cable fixing features 121. These outgoing optical fibers 423 can then be connected to fiber optic adapters 601 at the front 207 of the fiber optic tray 200. The incoming optical fibers 421 and outgoing optical fibers 423 may then be connected via one or more fiber optic components in fiber optic tray 200, such as one or more fiber optic splitters or splices.

Preferably, the fiber optic bracket 100 is installed in an equipment rack 400 when the fiber optic tray 200 is installed in the fiber optic bracket 100. Figure 4 illustrates fiber optic system 300 further comprising an equipment rack 400 in which the fiber optic bracket 100 (and hence the fiber optic tray 200 installed on the fiber optic bracket 100) is mounted.

The equipment rack 400 is configured to have one or more fiber optic brackets 100 mounted pivotably thereon. In Figure 4, fiber optic bracket 100 is illustrated in an upwardly pivoted position to show the underside of fiber optic bracket 100. Aperture 115 of fiber optic bracket 100 is visible in this view, and the first side 221 (i.e., the underside) of fiber optic tray 200 can be seen through the aperture 115. The fiber optic tray 200 may be provided without any covers on the first side 221 (e.g., first and second slack covers 251a, 251b in Figure 2D) when used with the fiber optic bracket 400. For example, covers on the first side 221 may be removed prior to installing the fiber optic tray 200 on the fiber optic bracket 400, or the fiber optic tray 200 may be designed such that there are never covers on the first side 221. As shown in Figure 4, the slack storage region 241 on the first side 221 is then accessible through the aperture 115 on the fiber optic bracket 400.

In the illustrated example in Figure 4, equipment rack 400 comprises a pair of rails 401 that have rack mounting portions 403 attached thereto. Each of the rack mounting portions 403 comprise mounts 405, 407 of the equipment rack 400. In the illustrated example, ten mounts 405, 407 are provided on the rack mounting portions 403 but in other examples more or fewer mounts 405, 407 may be provided.

A mount 405, 407 of the equipment rack comprises two parts, one part on one of the rack mounting portions 403 and another corresponding part on the other of the rack mounting portion 403. The two parts of the mount 405, 407 of the equipment rack 400 cooperate to receive the mount 101 of the fiber optic bracket 100 in a pivotable manner. As illustrated, the mount 405, 407 of the equipment rack 400 receives the pins 101a, 101b of the mount 101 of the fiber optic bracket 100 such that the pins 101a, 101b (and hence the fiber optic bracket 100) can rotate when inserted into the parts of the mount 405, 407.

Generally, the mount 405, 407 of the equipment rack 400 comprises openings to receive the first retaining features 103 (e.g., pins) of the fiber optic bracket 100. However, advantageously one of the parts comprises a hole 405 while the other comprises a corresponding slot 407. The hole 405 receives one of the pins 101a, 101b of the fiber optic bracket 100 and the slot 407 receives the other pin 101a, 101b of the fiber optic bracket 100. In this way, the fiber optic bracket 100 can easily be pivotably mounted in the equipment rack 400 without requiring any moving or deforming components, increasing ease of use and longevity of the system 300.

Preferably, the slots 407 are slanted such that, when the rack is positioned for use, one end of the slot 407 is lower than the other end so that one of the pins 101a, 101b of a fiber optic bracket 100 is maintained at the lower end of the slot 407 through the action of gravity. The lower end of the slot 407 is also preferably configured to be at the same height as the hole 405, so that the axis of rotation X of an installed fiber optic bracket 100 (defined between the pins 101a, 101b of the fiber optic bracket 100) is horizontal (i.e., perpendicular to the force of gravity). This ensures that the fiber optic bracket 100 will be in a stable resting position when installed in the equipment rack 400, as well as enabling the equipment rack 400 to have a number of fiber optic brackets 100 densely mounted thereon. As each of the installed fiber optic brackets 100 will have parallel axes of rotation X, a middle fiber optic bracket 100 can be accessed conveniently by rotating all of the fiber optic brackets 100 installed above on the equipment rack 400.

Figure 5 illustrates a close up view of a rack mounting portion 403 of the equipment rack 400, illustrating a plurality of holes 405 and slots 407. As illustrated, rack mounting portion 403 comprises five holes 405 and five slots 407, though it will be appreciated that in other instances more or fewer holes 405 and slots 407 may be present. The rack mounting portion 403 operates with a corresponding rack mounting portion 403 on the other side of the equipment rack 400 such that each hole 405 has an opposing slot 407 on the other rack mounting portion 403 and such that each slot 407 has an opposing hole 405 on the other rack mounting portion 403. As illustrated, the rack mounting portion 403 has alternating holes 405 and slots 407, in which case the opposing rack mounting portion 403 of equipment rack 400 will also comprise alternating holes 405 and slots 407. However, in other cases, one rack mounting portion 403 of equipment rack 400 may comprise only holes 405 and the other rack mounting portion 403 will comprise only slots 407.

Figure 6 shows a plurality of fiber optic brackets 100 and fiber optic trays 200 mounted to an equipment rack 400. As can be appreciated, when fiber optic brackets 100 are installed close to each other and supporting respective fiber optic trays 100, only one fiber optic tray 200 in the closely stacked arrangement is accessible, namely the top fiber optic tray 200. However, lower fiber optic trays 200 in the stacked arrangement can be accessed by a user by lifting all of the fiber optic trays 200 above the fiber optic tray 200 to be accessed (e.g., similar to the way an individual fiber optic tray 200 is shown in Figure 4), such that the fiber optic trays 200 above each rotate about their respective axes of rotation X, presenting the desired fiber optic tray 200 for access.

As well as having a plurality of fiber optic brackets 100 and trays 200 mounted to it, the equipment rack 400 of fiber optic system 300 may also have other components and perform other functions related to organising optical fibers and cables. Figure 6 illustrates the equipment rack 400 having three regions 411, 413, 415, each performing a different function.

The first region, at the top of the equipment rack 400 (when in use) is a cable entry region 411. Cable entry region 411 comprises an opening (not shown) into which one or more incoming optical fibers 421, typically as part of one or more incoming fiber optic cables, can enter equipment rack 400. Incoming optical fibers 421 may be fixed in the cable entry region 411 by cable fixing components 417. Cable fixing components 417 may comprise clamps or latches for securing incoming optical fibers 421. Alternatively, cable fixing components 417 may comprise some other form of fixing, such as protrusions or features against which an incoming optical fiber 421 may be secured using a cable tie.

From cable entry region 411, the incoming optical fibers 421 are routed within the equipment rack 400 to the fiber optic tray region 413. The fiber optic tray region 413 comprises a plurality of fiber optic trays 200 mounted within the equipment rack 400 upon fiber optic brackets 100, as described above with respect to Figures 4 and 5. As previously discussed, the incoming optical fibers 421 are routed from the equipment rack 400 into one of the fiber optic trays 200 through a cable entry port of the fiber optic tray 200 which is retained by the fiber optic bracket 100 such that the incoming optical fiber 421 enters the cable entry port of the fiber optic tray 200 substantially coaxial with the axis of rotation X of the fiber optic bracket 100 installed in the equipment rack 400. In this manner, when fiber optic brackets 100 are rotated to provide access to a given fiber optic tray 200, the incoming optical fibers 421 entering the fiber optic trays 200 of the fiber optic brackets 100 being rotated are not subject to any bending, kinking or pulling.

Within the fiber optic trays 200, the incoming optical fibers 421 may connect to various fiber optic components, such as fiber optic splitters or splices, depending upon the requirements of the user. Via whatever fiber optic components are required, signals from the incoming optical fibers 421 are ultimately routed to fiber optic adapters 601 on the inside of the fiber optic trays 200. Using connections established by the fiber optic adapters 601, the signals carried by the incoming optical fibers 421 (or by the fiber optic components that received such signals from the incoming optical fibers 421) are transferred to outgoing optical fibers 423.

From fiber optic adapters 601, outgoing optical fibers 423 are then routed along cable routing regions 119 of the fiber optic brackets 100 and into the slack storage region 415, also referred to as a cable management region 415. In the slack storage region 415, excess lengths of outgoing optical fibers 423 (or, in some cases, incoming optical fibers 421 as well) can be neatly organised and stored using overlength storage features 419. Overlength storage features 419 generally take the form of shelves or hooks over which lengths of optical fiber can be draped or coiled. Having had excess lengths of optical fiber stored in slack storage region 415, outgoing optical fibers 423 can then pass out of equipment rack 400 for connection elsewhere in the fiber optic network.

In this manner, the fiber optic system 300 comprising an equipment rack 400 having a plurality of fiber optic brackets 100 and fiber optic trays 200 mounted therein can provide convenient access to fiber optic components upon densely stored fiber optic trays 200 while at the same time reducing the risk of damage to the optical fibers passing through fiber optic system 300 during access.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Particular aspects of the invention will be set forth in the following numbered clauses:
Clause 1. A fiber optic bracket for mounting a fiber optic tray in an equipment rack, the fiber optic bracket having a front edge and a rear edge opposite the front edge, the fiber optic bracket comprising:
   a mount positioned proximal to the rear edge of the fiber optic bracket for pivotably mounting the fiber optic bracket in an equipment rack about an axis of rotation;
   one or more first retaining features for retaining a fiber optic tray; and
   a fiber optic entry region at the rear edge for receiving an optical fiber routed from the equipment rack to a fiber optic tray installed in the fiber optic bracket such that the optical fiber substantially aligns with the axis of rotation when passing through the fiber optic entry region.
Clause 2. The fiber optic bracket of clause 1 for use with a fiber optic tray having a rear edge comprising a cable entry port for routing an optical fiber from the equipment rack into the fiber optic tray;
   wherein the one or more retaining features of the fiber optic bracket are configured to retain the fiber optic tray such that the rear edge of the fiber optic tray substantially aligns with the axis of rotation to position the cable entry port within the fiber optic entry region of the fiber optic bracket.
Clause 3. The fiber optic bracket of clause 1 or 2, further comprising a base, wherein the one or more bracket retaining features are configured to retain the fiber optic tray such that a side of the fiber optic tray is adjacent to the base; and
   wherein the base comprises a cut-out region to allow access to the side of the fiber optic tray adjacent to the base through the fiber optic bracket.
Clause 4. The fiber optic bracket of any preceding clause, wherein the mount comprises a pair of coaxially aligned pins for engagement with a corresponding hole and slot in an equipment rack.
Clause 5. The fiber optic bracket of any preceding clause, wherein the first retaining features comprise one or more protrusions for engaging with corresponding openings in the fiber optic tray; or
   wherein the first retaining features comprise one or more openings for engaging with corresponding protrusions on the fiber optic tray.
Clause 6. The fiber optic bracket of any preceding clause, wherein the first retaining features comprise two or more rails to enable the fiber optic tray to be slid into a retained position on the fiber optic bracket.
Clause 7. The fiber optic bracket of any preceding clause further comprising one or more cable routing regions arranged at one or both of a pair of opposing edges of the fiber optic bracket extending between the rear bracket edge and the front bracket edge.
Clause 8. The fiber optic bracket of clause 7, wherein the one or more cable routing regions each comprise one or more cable fixing features for retaining fiber optic cables passing through the cable routing regions.
Clause 9. The fiber optic bracket of clause 7 or 8, wherein the one or more cable routing regions are configured to route fiber optic cables from the equipment rack to a front portion of a fiber optic tray retained by the fiber optic bracket.
Clause 10. A fiber optic system comprising the fiber optic bracket of any of clauses 2 to 9 and a fiber optic tray, the fiber optic tray comprising:
   a cable entry port along a rear tray edge of the fiber optic tray; and
   one or more second retaining features for engaging with the one or more first retaining features of the fiber optic bracket to retain the fiber optic tray in the fiber optic bracket when installed.
Clause 11. The fiber optic system of clause 10, wherein the one or more second retaining features comprise one or more openings for engaging with corresponding protrusions on the fiber optic bracket; or
   wherein the second retaining features comprise one or more protrusions for engaging with corresponding openings on the fiber optic bracket.
Clause 12. The fiber optic system of clause 10 or 11, wherein the fiber optic tray comprises a plurality a fiber optic adapters along a front tray edge of the fiber optic tray, the front tray edge opposite the rear tray edge.
Clause 13. The fiber optic system of any of clauses 10 to 12, wherein the fiber optic tray comprises a first side and a second side opposite the first side, the first and second side each having one or more fiber optic components disposed thereon;
   wherein the fiber optic bracket is configured to retain the fiber optic tray such that the first side is adjacent to the base of the fiber optic bracket such that the fiber optic components disposed on the first side of the fiber optic tray are accessible through the cut-out region in the base of the fiber optic bracket.
Clause 14. The fiber optic system of any of clauses 10 to 13, wherein the fiber optic tray is a splice tray or a patch tray.
Clause 15. The fiber optic system of any of clauses 10 to 14, further comprising an equipment rack comprising an equipment rack mount for engaging with the mount of the fiber optic bracket to pivotably mount the fiber optic bracket in the equipment rack about the axis of rotation.
Clause 16. The fiber optic system of clause 15, wherein the mount of the fiber optic bracket comprises first and second coaxially aligned pins or protrusions; and
   wherein the equipment rack mount comprises a hole and a slot such that the fiber optic bracket can be mounted by inserting the first coaxially aligned pin of the fiber optic bracket into the hole and sliding the second coaxially aligned pin into the slot.
Clause 17. The fiber optic system of clause 16, wherein an end of the slot of the equipment rack mount is coaxially aligned with the hole of the equipment rack mount; and wherein the slot is angled such that, in use, gravity retains the fiber optic bracket in the slot such that the axis of rotation of the fiber optic bracket is coxial with the axis of the hole of the equipment rack mount.

## Claims

1. A fiber optic system comprising a fiber optic tray and a fiber optic bracket for mounting the fiber optic tray in an equipment rack;
wherein the fiber optic tray comprises a cable entry port for receiving an optical fiber; wherein the fiber optic bracket comprises one or more first retaining features for retaining the fiber optic tray and a mount for pivotably mounting the fiber optic bracket in the equipment rack about an axis of rotation; and
wherein the one or more first retaining features of the fiber optic bracket are configured to retain the fiber optic tray with the cable entry port of the fiber optic tray proximal to the axis of rotation such that an optical fiber entering the fiber optic tray from the equipment rack enters the cable entry port substantially coaxial with the axis of rotation.

2. The fiber optic system of claim 1, wherein the fiber optic tray comprises a first side and a second side opposite the first side, the first side including a slack storage region for storing excess length optical fiber that is received by the fiber optic tray;
wherein the fiber optic bracket comprises a base having an aperture; and
wherein the one or more first retaining features of the fiber optic bracket are configured to retain the fiber optic tray with the first side of the fiber optic tray adjacent to the base of the fiber optic bracket such that the slack storage region on the first side is accessible through the aperture.

3. The fiber optic system of claim 1 or 2, wherein the fiber optic tray comprises one or more second retaining features for engaging with the one or more first retaining features of the fiber optic bracket to retain the fiber optic tray on the fiber optic bracket.

4. The fiber optic system of claim 3, wherein the one or more first retaining features comprise one or more pins and wherein the one or more second retaining features comprise one or more holes for engaging with the one or more pins; or
wherein the one or more second retaining features comprise one or more pins and wherein the one or more first retaining features comprise one or more holes for engaging with the one or more pins.

5. The fiber optic system of claim 3 or 4, wherein the one or more first retaining features comprise one or more guides and wherein the one or more second retaining features comprise one or more rails for engaging with the one or more guides such that the fiber optic tray can be slid into a retained position on the fiber optic bracket; or
wherein the one or more second retaining features comprise one or more guides and wherein the one or more first retaining features comprise one or more rails for engaging with the one or more guides such that the fiber optic tray can be slid into a retained position on the fiber optic bracket.

6. The fiber optic system of any preceding claim, wherein the fiber optic bracket includes a front edge, a rear edge, and a pair of opposing side edges extending between the rear edge and the front edge, and wherein the fiber optic bracket further comprises one or more cable routing regions arranged at one or both of the side edges.

7. The fiber optic system of claim 6, wherein the one or more cable routing regions each comprise one or more cable fixing features for retaining fiber optic cables passing through the cable routing regions.

8. The fiber optic system of claim 6 or 7, wherein the fiber optic tray further comprises one or more fiber optic adapters on an opposing edge to the cable entry port;
wherein the fiber optic bracket is configured to retain the fiber optic tray such that the cable entry port is proximal to the rear edge of the fiber optic bracket and such that one or more fiber optic adapters are proximal to the front edge of the fiber optic bracket.

9. The fiber optic system of any of claims 6 to 8, wherein the one or more cable routing regions are configured to route optical fibers from the fiber optic bracket to the one or more fiber optic adapters.

10. The fiber optic system of any preceding claim, further comprising the equipment rack;
wherein the equipment rack comprises a mount for engaging with the mount of the fiber optic bracket to pivotably mount the fiber optic bracket in the equipment rack about the axis of rotation.

11. The fiber optic system of any preceding claim, wherein the mount of the fiber optic bracket comprises a pair of coaxially aligned holes and/or slots for engagement with corresponding pins on the equipment rack.

12. The fiber optic system of any of claims 1 to 10, wherein the mount of the fiber optic bracket comprises a first pin and a second pin that are coaxially aligned with each other; and
wherein the mount of the equipment rack comprises a hole and a slot such that the fiber optic bracket can be mounted to the equipment rack by inserting the first pin of the fiber optic bracket into the hole and sliding the second pin of the fiber optic bracket into the slot.

13. The fiber optic system of claim 12, wherein the slot is slanted so as to retain the fiber optic bracket in a mounted position in the equipment rack once mounted through the action of gravity.

14. The fiber optic system of any of claims 10 to 13, wherein the equipment rack is configured to have a plurality of fiber optic brackets mounted to it.

15. The fiber optic system of any preceding claim, wherein the fiber optic tray is a fiber optic splice tray or a fiber optic patch tray.
